# EUROPÄISCHE PATENTSCHRIFT

(11) **EP 1 818 245 B1**
(45) Veröffentlichungstag und Bekanntmachung des Hinweises auf die Patenterteilung: **27.04.2011**
(21) Anmeldenummer: 06002953.5
(22) Anmeldetag: 14.02.2006
(51) Int. Cl.: B62D 59/04

(54) **Anhänger und Verfahren zum Antreiben eines Anhängers**
Trailer and method of driving a trailer
Remorque et procédé d'entraînement d'un remorque

(43) Veröffentlichungstag der Anmeldung: 15.08.2007
(73) Patentinhaber: Paul Forrer AG, 8048 Zürich (CH)
(72) Erfinder: Guggisberg, Erich, 5445 Eggenwil/AG (CH)
(74) Vertreter: Stulz Messerschmidt, Stephan

(56) Entgegenhaltungen:
- DE-A1- 3 206 403
- DE-A1- 4 324 211
- US-A- 4 625 821

## Beschreibung

Die Erfindung betrifft einen Anhänger nach dem oberbegriff des Anspruch 1 sowie ein verfahren nach dem oberbegriff des Anspruchs 10, insbesondere für Anhänger von Zugfahrzeugen vorwiegend für den Einsatz in der Land- und Forstwirtschaft. Mittels einer integrierten Mess- und Regelvorrichtung wird die auf die Radantriebsvorrichtung des Anhängers übertragene Radantriebsleistung den vorhandenen Fahrzuständen und Terrainverhältnissen angepasst. Auf diese Weise kann das Radartriebsleistungsverhältnis zwischen Anhänger und Zugfahrzeug variiert werden.

Wird ein von einem Zugfahrzeug gezogener Anhänger mit einem Radantrieb versehen, so muss für alle möglichen Fahrzustände (zum Beispiel Vorwärtsfahrt, Rückwärtsfahrt, Kurvenfahrt, Last- und Leerfahrt) sowie für verschiedene Terrainverhältnisse (zum Beispiel Steil- und Berghänge mit feuchtem oder allenfalls auch mit glitschigem Untergrund) insbesondere sichergestellt werden, dass die Fahrgeschwindigkeit von Zugfahrzeug und Anhänger in einem genau definierten Verhältnis stetig synchronisiert sind. Fehlt eine solche Syrichronisation, können sich unerwünschte und mitunter gefährliche Betriebszustände ergeben, indem beispielsweise ein Zugfahrzeug von einem Anhänger aus der Spur gestossen oder das Zugfahrzeug durch den Anhänger gebremst, anstelle unterstützend angetrieben wird und umgekehrt usw.

Aus dem Stand der Technik sind Radantriebsvorrichtungen für Anhänger bekannt, bei denen die Geschwindigkeitssynchronisation des Anhängers über einen wegabhängigen, zusätzlichen Zapfwellenantrleb und ein Getriebe erfolgt. In GB 737'514 ist eine Antriebsvorrichtung vorgeschlagen, bel dem die Geschwindigkeit des Anhängers manuell über eine so genannte changespeed gear box eingestellt bzw. variiert werden kann. US 4,625,821 (D2) zeigt eine hydraulische Radantriebsvorrichtung, bei der die Synchronisation der Geschwindigkeiten über einen am Zugfahrzeug angebrachten Geschwindigkeitssensor erfolgt.

In der gattungsbildenden 43 24 211 A1 (D1) wird ein Fahrantrieb beschrieben. bei dem der auf Zug- oder Schub belasteten Verbindungsstelle die von der Belastung erzeugte Kraft gemessen und der Fahrantrieb über einen Ist-Solliwert-Vergleich geregelt angetrieben wird. Das Kraftssignal wird als Istwert mit einem als Sollwert gespeicherten Kraftsignal verglichen und der Fahrantrieb in Abhängigkeit von der Abweichung zwischen Istwert und Sollwert wobei In dieser Erfindung verschiedene Methoden zur Erzeugung des Kraftsignals beschrieben werden, Wird bei der beschriebenen Erfindung der Sollwert nicht erreicht, so führt die Differenz zwischen Sol- und Istwert zur Schwenkung der Verstelleinrichtung und dies wiederum führt zu einer Erhöhung oder Verminderung des Ölförderstroms, was wiederum eine entsprechende Druckerhöhun am Fahrantrieb zur Folge hat (vol. auch Zusammenfassunp von D1),

Je nach Einstellung des_Sollwerts durch den Fahrer sowie den vorhandenen tatsächlichen Gegebenheiten_(Terrain Beladung etc.) resultieren bel der Erfindung D1 ganz unterschiedliche Drehmomente auf den Fahrantrieb. Dies wiederum kann leicht dazu führen, dass die maximal mögliche Haftung überschritten wird und der Fahrantrieb durchdreht" bzw. schlüpft" und möglicherweise der Anhänger in schwierigen Verhältnisse ins Rutschen gerät,

Auf demselben System ist auch die in DE 3206403; Howard Machinery Ltd (D3) offenbarte Erfindung aufgebaut, wobel dieses System nicht über einen Soll/Istwert-Vergleich funktioniert, sondern über eine variable Blende die den Durchsatz der Pumpe bzw. die Fördermenge entsprechend beeinflusst: (vgl. D3. Seite 6. Absatz). Bei allen aus dem Stand der Technik bekannten Systemen bildet die Messung der effektiven Kraft an der Zugvorrichtung) zentrafes Element der Erfindung. Aufgrund der gemessenen Kräfte an der zugvorrichtung wird die Antriebskraft des Anhängers direkt festgeleat.

Die aus dem Stand der Technik bekannten Antriebsvorrichtungen eignen sich nur für konstante Terrainverhältnisse und Fahrzustände. In der Praxis sind jedoch wechselnde Fahr-, Terrain- und Betriebszustände die Regel, was bei den aus dem Stand der Technik bekannten Antriebsvorrichtungen zu äusserst komplexen und teuren Regelungsvorrichtungen führt. Dies dürfte auch der Grund sein, weshalb sich die oben angeführten Radantriebsvorrichtungen in der Praxis sich nicht im grossen Stile durchsetzen konnten. Ferner ist zu berücksichtigen, dass gleichbleibende Terrainverhältnisse mit konstanten Fahrzuständen am ehesten bei Strassenfahrten - also bei höheren Geschwindigkeiten - auftreten, wo sich aber die kleinste Unstimmigkeit bezüglich Fahrgeschwindigkeit von Zugfahrzeug und Anhänger auf die Fahrsicherheit niedersthlägt.

Ein grosser Nachteil der bekannten Radantriebe besteht also darin, dass diese nur bei absolut gleich bleibenden Terrain- bzw. Strassenverhältnissen sowie konstanten, gleich bleibenden Fahrzuständen (Vorwärtsfahrt, Rückwärtsfahrt im Zug- oder Bremsmodus) zufrieden stellend funktionieren.

Die Ursache komplexer Regelsystemen rührt in erster Linie von den unterschiedlichen Fahrspuren von Zugfahrzeug und Anhänger bei der Kurvenfahrt her, wie dies beispielsweise in JP 622'89'472 gezeigt wird. Dabei ist zu berücksichtigen, dass Zugfahrzeuge regelmässig unterschiedlich gebauten Anhängern vorgespannt werden, was bereits bei einer Kurvenfahrt auf ebenem Gelände für jede Zugfahrzeug/Anhängerkombination jeweils individuelle Fahrspuren/Geschwind lgkeitsprofile zur Folge hat. Stimmen die Geschwindigkeitsprofile der verschiedenen Antriebe nicht exakt überein, so werden diese Geschwindigkeitsdifferenzen über die Antriebsräder entsprechend der vorhandenen Bodenhaftung ausgeglichen. Bei hoher Bodenhaftung (zum Beispiel trockene Strasse mit grosser Last) führt dies unter anderem zu sehr hohen Spitzenbelastungen und zu unerwünschten Verschleisserscheinungen sowie Energieverlusten. Bei geringerer Bodenhaftung (zum Beispiel im Land- und Forstwirtschaftssektor) können Geschwindigkeitsdifferenzen zudem äusserst gefährliche Betriebszustände (Rutschen oder Wegstossen) zur Folge haben.

Die aus dem Stand der Technik bekannten Erfindungen basieren alle darauf dass die Kraft zwischen Zugfahrzeug und Anhänger gemessen wird. Diese Kraft wiederum wird mit einem Sollwert (D1) verglichen und mittels der Differenz wird der Fahrantrieb mit mehr oder weniger Fördervolumen versorgt, Bei D3 eschieht diese Anpassung über eine verstellbare Blende. Solchen Systemen ist immanent, dass die maximal mögliche Haftung am Fahrantrieb, vom Fahrer unbeabgichtigt und leicht überschritten werden kann und der Fahrantrieb "durchdreht/schlüpft" sowie möglicherwelse der Anhänger in schwierigen Verhältnisse sogar ins Rutschen gerät,

Vor diesem Hintergrund ist es Aufgabe der vorliegenden Erfindung, eine einfache, kostengünstige, zu- und abschaltbare Radantriebsvorrichtung bzw. Verfahren zur Verfügung zu stellen, die bzw. das sich unabhängig von wechselnden Terrainverhältnissen und/oder Fahrzuständen gleichermassen zuverlässig einsetzen lässt und sich die auf die Radantriebsvorrichtung übertragene Antriebsleistung vorzugsweise vom Zugfahrzeug aus vorgegeben werden kann und sich diese Antriebsleistung entsprechend den vorhandenen Terrainverhältnissen und Fahrzuständen automatisch anpasst.

Ferner ist es Aufgabe der vorliegenden Erfindung eine Radantriebsvorrichtung bzw. Verfahren zur Verfügung zu stellen, das sich für unterschiedliche Anhängertypen gleichermassen einsetzen lässt und soweit als möglich, auf dem vorhandenen Hydrauliksystem am Zugfahrzeug aufbaut.

Eine weitere Aufgabe der offenbarten Erfindung ist es, eine Radantriebsvorrichtung zur Verfügung zu stellen, die sich gleichermassen als Bremse bzw. als Antrieb einsetzen lässt.

Diese Aufgabe wird durch eine Vorrichtung gemäss Patentanspruch 1 bzw. ein Verfahren für eine hydrostatische Radantriebsvorrichtung gemäss Patentanspruch 10 gelöst.

Das der Erfindung zugrunde liegende Konzept beruht auf der Erkenntnis, dass die aus dem Stand der Technik bekannte Synchronisation von Zugfahrzeug mit gezogenem Anhänger nicht zwingend über die Geschwindigkeit als Stellgrösse erfolgen muss, sondern es sich als sehr vorteilhaft erweist, wenn über ein intelligentes Steuer-/Regelungssystem die vom Zugfahrzeug auf den Anhänger übertragene Antriebsleistung variiert werden kann und sich in gewissen Bandbreiten entsprechend den jeweiligen Fahrzuständen (zum Beispiel Vorwärtsfahrt, Rückwärtsfahrt, Kurvenfahrt, Last- und Leerfahrt) sowie für verschiedene Terrain- und Strassenverhältnisse anpasst werden kann bzw. angepasst wird.

Zu diesem Zweck werden in einer einfachen Ausführungsform die an der Zugvorrichtung vorherrschenden Krüffeverhältnisse erfasst und als erste Stellgrösse in den entsprechenden Regelkreise eingespiesen, welcher über verschiedene Wegeventile die Antriebs- oder Bremsleistung der Radantriebsvorrichtung des Anhängers vorgibt. Im Gegensatz zu den aus dem Stand der Technik bekannten Vorrichtungen muss _ nicht die Kraft über die üblichen Messvorrichtungen Dehnmessstreifen, geschlossener hydraulischer etc.; vgl D1 Spalte 3) gemessen werden, sondern mit einer einfachen Vorrichtung an der Zugvorrichtung wird lediglich festgestellt, ob der Anhänger gezogen wird oder ob der Anhänger drückt. Mit anderen Worten ermittelt die an der Zugvorrichtung angebrachte Vorrichtung lediglich das Vorzeichen der zwischen dem Anhänger und dem Zugfahrzeug wirkenden Kraft. Dabei ist grundsätzlich zwischen drei Betriebszuständen zu unterscheiden (Neutral. Zug oder Druck).

Ebenfalls im Gegensatz zu den aus dem Stand der Technik bekannten Vorrichtungen erfolgt der Radantrieb nicht über eine Variation der Ölfördermenge, sondern über eine aus dem Stand der Technik bekannten Load Sensing Pumpe, bei weichen der Öldruck und somit das zu übertragende Drehmoment am Radantrieb individuell und in der Riegel manuell vorgegeben wird. Dieser Ölförderdruck wird durch die Load Sensing Pumpen konstant gehalten und sobald die Geschwindigkeit des Anhängers erhöht wird, so erhöht sich auch der Ölförderstrom, sodass am Radantrieb grundsätzlich immer dasselbe, vorgegebene Drebmoment übertragen, wird egal ob das Gefährt schnell oder langsam unterwegs ist.

Eine zweite Stellgrösse Ist das über ein Potentiometer oder eine gleichwirkende Vorrichtung in den Regelkrels eingespiesene Signal zur Bestimmung der maximalen Antriebs- bzw. Bremskraft. Die dritte Stellgrösse ist ebenfalls ein vom Zugfahrzeug ausgehendes Signal zur Bestimmung der Fahrtrichtung (Vor- oder Rückfahrt). Mit einer solchen Anordnung erübrigt sich die aus dem Stand der Technik bekannte Geschwindigkeitssynchronlslerung von Zugfahrzeug und Anhänger gänzlich und es wird eine höchstmögliche Flexibilität in Bezug auf alle möglichen Fahrzustände und Terrafnverhältnisse erreicht.

Es zeigen schematisch und vereinfacht:
- **Fig. 1**: Zugfahrzeug und Anhänger mit einer möglichen Anordnung der verschiedenen Komponenten
- **Fig. 2**: Zugvorrichtung (Detail von Pos. 4 und Pos. 4.0)

- **Fig. 3**: Prinztpschaltschema

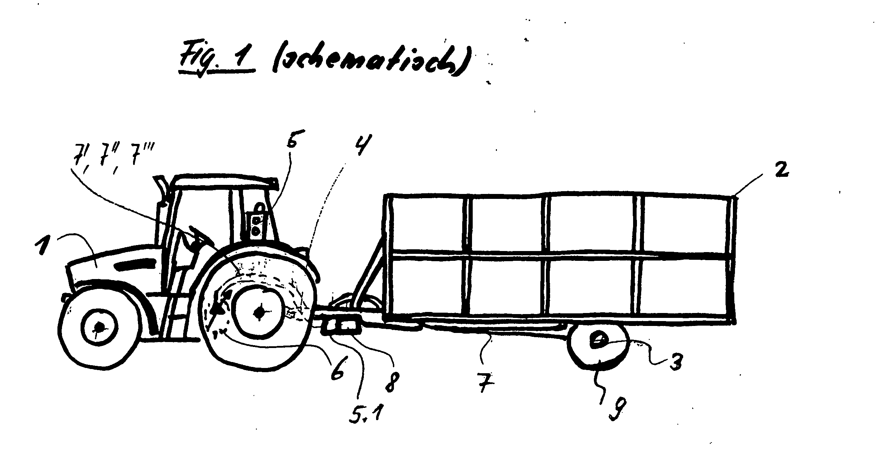

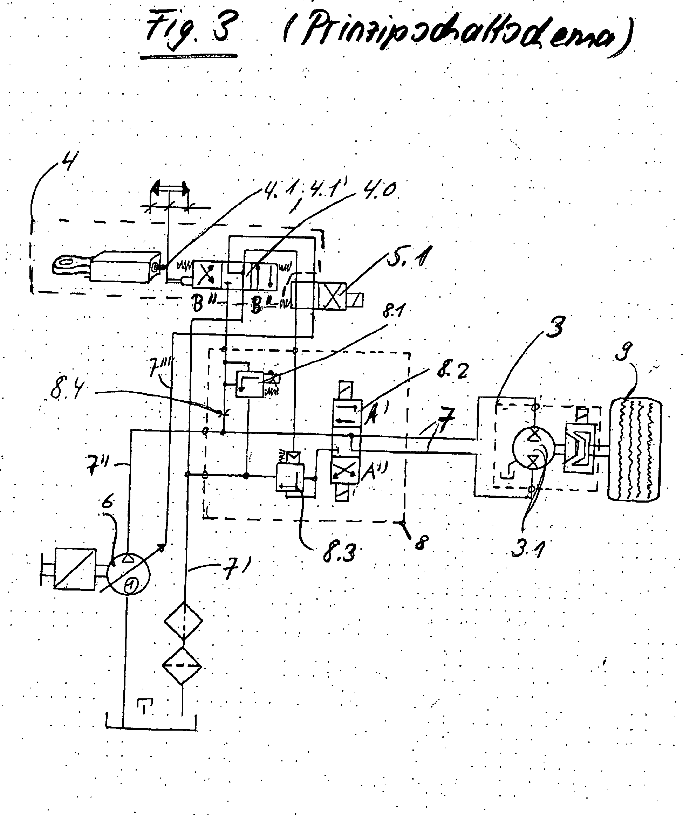

**Figur 1** zeigt schematisch ein Zugfahrzeug 1 und einen Anhänger 2 sowie eine mögliche Anordnung der verschiedenen Komponenten. Zwischen dem Zugfahrzeug 1 und dem Anhänger 2 ist eine Zugvorrichtung 4 mit einer Messvorrichtung 4.1 (vgl. Fig, 2) angebracht. Aus der Figur 1 ist schematisch eine Hydraulikpumpe 6 ersichtlich, welche durch Verbindungsleitungen 7, 7', 7", 7''' mit einem Hauptsteuerblock 8, einem 4/3-Wegeventil 4.0 (vgl. im Einzelnen Fig. 3) sowie mit einer hydrostatischen Radantriebsvorrichtung 3 und einer Regelvorrichtung 5 sowie *einem* 412-Wegeventil *verbunden* ist.
In einer bevorzugten Ausführungsform ist der Pumpdruck als auch der Förderstrom der Hydraulikpumpe 6 verstell- bzw. regelbar (sog. load sensing). Mit dieser Hydraulikpumpe 6 wird belspielsweise im Antriebsmodus immer soviel Hydrauliköl gefördert wie benötigt wird, um bei jeder beliebigen Geschwindigkeit den über die Zugvorrichtung 4, das 4/3-Wegeventil 4.0, den Hauptsteuerblock 8 sowie die Regeivorrichtung 5 vorgegebenen Oeidruck zu erreichen. Im Bremsmodus wird über dieselben Vorrichtungen (4, 4.0, 5, 8) sowie über ein Bremsventil 8.3 ein Gegendruck auf einen hydrostatischen Radantriebsmotor 3.1 aufgebaut, um ein entsprechendes Bremsmoment am Rad 9 zu erzeugen. Vorzugsweise sind Hydraulikpumpe 6, Regelvorrichtung 5 am Zugfahrzeug 1, Hauptsteuerblock 8 sowie das 4/2-Wegeventil 5.1 am Anhänger 2 angebracht. Ein solcher Aufbau ermöglicht eine kompakte und bedienungsfreundliche Bauweise. Andere Anordnungen der Komponenten sind - entsprechend den konkreten Anforderungen - ohne weiteres möglich.

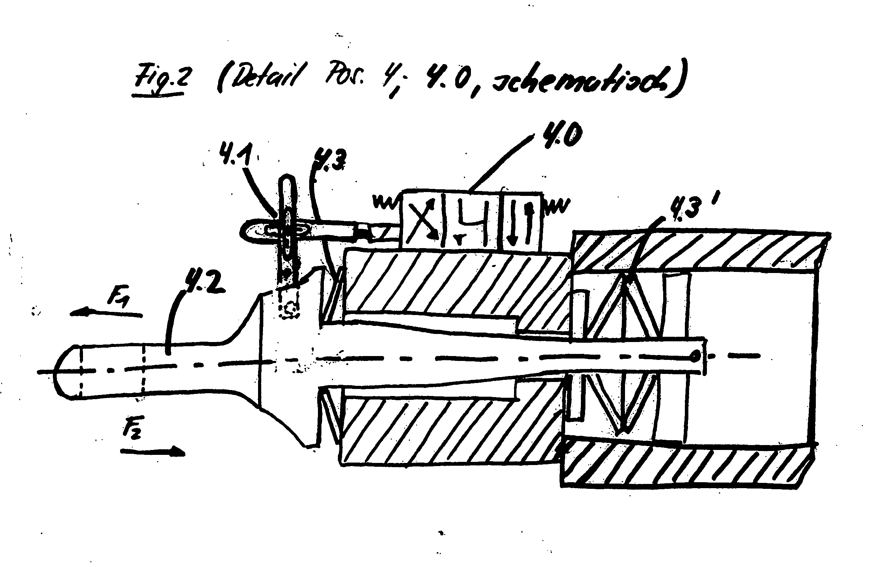

**Figur 2** zeigt schematisch die Anordnung der Messvorrichtung 4.1, welche vorzugsweise an der Zugvorrichtung 4 angebracht ist. Mit der Messvorrichtung 4.1 wird ermittelt, ob der Anhänger 2 sich im Zug- resp. Antriebsmodus, in der Neutralposition oder im Bremsmodus befindet. In einer bevorzugten Ausführungsform wird diese Messvorrichtung 4.1 mittels einem verstellbaren Gestänge (mit einem verschiebbaren Drehpunkt) ausgeführt, sodass das Verhältnis der Relativbewegung des Zugzapfens 4.2 mit der Bewegung der Messvorrichtung 4.1, die zum 4/3-Wegeventil 4.0 führt, eingestellt und justiert werden kann. Liegt zwischen den auf den Anhänger 2 einwirkenden Hangabtriebskräften und dem Rollwiderstand ein Kräftegleichgewicht vor, so befindet sich das 4/3-Wegeventil 4.0 in der mittleren, neutralen Position und die hydrostatischen Radantriebsmotoren 3.1 werden weder angetrieben noch gebremst. Ein solcher Betriebszustand kann sich im Stillstand, beim Ausrollen des Fahrzeuges oder etwa bei leichter Talfahrt ergeben. In den beiden anderen Positionen (B' bzw. B") wird mit dem 4/3-Wegeventil 4.0 die hydrostatische Radantriebsvorrichtung 3 mittels der Hydraulikpumpe 6, der Regelvorrichtung 5, dem Hauptsteuerblock 8 sowie den Verbindungsleitungen 7, 7', 7" angetrieben bzw. gebremst (Berg- bzw. Talfahrt).
Bei der schematisch gezeigten Zugvorrichtung 4 handelt es sich um eine handelsübliches Produkt, welche je nach Lieferant jedoch unterschiedliche Bauformen aufweisen kann. An dieser Zugvorrichtung 4 wird in einer vorzugsweisen Ausführungsform die Messvorrichtung 4.1 angebracht. Mit dem Einsatz verschiedener Tellerfedern 4.3 bzw. 4.3' kann die Charakteristik und das Regelverhalten der Radantriebsvorrichtung zusätzlich variiert und angepasst werden.

**Figur 3** zeigt das Prinzipschaltschema einer vorzugsweisen Ausführungsform der erfindungsgemässen Vorrichtung. Dieses zeigt die Zugvorrichtung 4 mit der Messvorrichtung 4.1 und dem 4/3-Wegeventil 4.0, deren Funktionsweise zusammen mit Figur 2 beschrieben ist. Ersichtlich ist weiter der sogenannte Hauptsteuerblock 8, welcher mindestens ein weiteres 4/3-Wegeventil 8.2 sowie zwei verschiedene Druckbegrenzungsventile 8.1 und 8.3 und eine Blende 8.4 umfasst.
Zwischen dem 4/3-Wegeventil 4.0, der Hydraulikpumpe 6 und dem Hauptsteuerblock 8 ist ein weiteres 4/2-Wegeventil 5.1 angeordnet. Über dieses Ventil 5.1 kann der Fahrer mit einem vorzugsweise in der Führerkabine angebrachten Schalter (integriert in der Regelvorrichtung 5) die Drehrichtung (d.h. Vorwärts- bzw. Rückwärtsfahrt) des hydrostatischen Radantriebsmotors 3.1 vorgeben. Dieses Signal kann gegebenenfalls auch über die Position der Gangschaltung am Zugfahrzeug 1 automatisiert werden,

Die Hydraulikpumpe 6 wird in einer bevorzugten Ausführungsform am Zugfahrzeug 1 angebracht, wobei der Antrieb direkt von der Kurbelwelle oder über einen separaten Abtrieb erfolgen kann. Es besteht auch die Möglichkeit auf einen bestehenden Hydraulikkreislauf als Druckölversorgung zurückzugreifen. Eine solche Ausführungsform ermöglicht es, ein und dieselbe Hydraulikpumpe 6 (inkl. aller Hilfskomponenten wie Oeltank, usw.) für verschiedene Anhängertypen und hydrostatische Radentriebsvorrichtungen sowie für alle weiteren hydraulischen Verbraucher einzusetzen, was sich auf die Investitionskosten äusserst positiv auswirkt. Mit dem im Hauptsteuerblock 8 angebrachten ersten Druckbegrenzungsventil 8.1 kann in einer bevorzugten Ausführungsform der maximale Öldruck in der zufliessenden Verbindungsleitung 7 und somit das maximale Antriebsmoment des hydrostatischen Radantriebsmotors 3.1 vorgegeben werden. Mit dem zweiten im Hauptsteuerblock 8 angebrachten Druckbegrenzungsventil 8.3 kann der maximale Druck in der abfliessenden Verbindungsleitung 7 eingestellt und somit das maximale Bremsmoment des hydrostatischen Radantriebsmotors 3.1 vorgegeben werden.

Mit der erfindungsgemässen Vorrichtung sind in einer bevorzugten Ausführungsform grundsätzlich nachfolgend beschriebene Betriebszustände zu unterscheiden, wobei jeweils zwischen der Fahrrichtung und der übertragenen Leistung zu unterschieden ist. Vorteilhafte Ausführungsformen werden nachfolgend anhand **Fig. 3** (Prinzipschaltschema) beschrieben.

### BETRIEBSMODUS "VORWÄRTS"

**Vorwärts/Neutral** (im Stillstand, beim Ausrollen, ohne Zug- oder Druckkraft an der Zugvorrichtung 4): Das 4/3-Wegeventil 8.2 ist in Arbeitsposition A', die Hydraulikpumpe 6 befindet sich im standby-Modus. Das 4/3-Wegeventil 4.0 ist in Mittelstellung, da sich die auf die Zugvorrichtung 4 wirkenden Kräften F1 und F2 im Gleichgewicht befinden. Dementsprechend wird kein Druck in der Verbindungsleitung 7" aufgebaut und die Hydraulikpumpe 6 verbleibt im standby-Modus. Es wird folglich auch keine Leistung auf die hydrostatischen Radantriebsmotoren 3.1 übertragen, d.h., die hydrostatische Radantriebsvorrichtung 3 ist betriebsbereit. **Vorwärts/Zugmodus:** Beim Anfahren wird durch die Zugkraft F1 an der Zugvorrichtung 4.1 die Rückstellkraft der Tellerfedern 4.3' überwunden und durch die Messvorrichtung 4.1 wird das 4/3-Wegeventil 4.0 in die Arbeitsposition B' gebracht. Durch den vorhandenen standby-Druck der Pumpe 6 erfolgt in der Leitung 7''' über eine Drossel 8.4 ein Druckaufbau, der die Pumpe 6 unverzüglich zur Förderung von Drucköl veranlasst. Dies wiederum bewirkt, dass über das geschaltete 4/3-Wegeventil 8.2 in der Arbeitsposition A' der hydrostatische Radantriebsmotor 3.1 mit Drucköl beaufschlagt und ein entsprechendes Drehmoment übertragen wird. Das maximale Antriebsmoment am Rad 9 wird über das Druckbegrenzungsventil 8.1, welches beispielsweise über den Sollwert eines Potentiometers vom Fahrer des Zugfahrzeuges 1 (nicht dargestellt, ebenfalls integriert in der Regelvorrichtung 5) vorgeben wird, eingestellt.

**Vorwärts/Bremsen** (Talfahrt oder Abbremsen): Durch die auftretenden Kräfte wird das 4/3-Wegeventil über die Messvorrichtung 4.1 in Position B" geschoben. Gleichzeitig fliesst vom hydrostatischen Radantriebsmotor 3.1 Hydrauliköl durch das Druckbegrenzungsventil 8.3 zurück. Der das Bremsmoment bestimmende Gegendruck an den hydrostatischen Radantriebsmotoren 3.1 richtet sich nach dem Druck in der Steuerdruckleitung des Druckbegrenzungsventils 8.3, der über die Position B" des 4/3-Wegeventils 4.1 und über das Druckbegrenzungsventil 8.1 vordefiniert ist. Die Funktionsweise und Ansteuerung der übrigen Komponenten ist identisch im oben beschriebenen Modus "Vorwärts/Antrieb". Die Hydraulikpumpe 6 stellt in diesem Modus sicher, dass das System sicher mit Hydrauliköl versorgt wird

### BETRIEBSMODUS "RÜCKWÄRTS"

**Rückwärts/Neutral** (im Stillstand, Ausrollen oder ohne Zug- oder Druckkraft an der Zugvorrichtung): Mit Ausnahme, dass sich das 4/3-Wegeventil 8.2 in der Stellung A" befindet und das 4/2-Wegeventil 5.1 betätigt ist, üben die übrigen Komponenten dieselben regelungstechnischen Funktionen aus wie im neutralen Modus "Vorwärts" aus und weisen dieselben Ventilstellungen auf.

**Rückwärts/Druck** (beim Rückwärtsfahren, im Druckmodus): Durch die auftretende Druckkraft F2 an der Zugvorrichtung 4 wird das 4/3-Wegeventil 4.0 in die Position B" gebracht. Über das betätigte 4/2-Wegeventil 5.1 erfolgt durch den standby-Druck der Hydraulikpumpe 6 ein Druckaufbau in der Leitung 7''' und die Hydraulikpumpe 6 fördert unverzüglich Drucköl. Dies wiederum bewirkt, dass über das geschaltete 4/3-Wegeventil 8.2 (in Position A") der hydrostatische Radantriebsmotor 3.1 mit Drucköl beaufschlagt und das entsprechende Drehmoment übertragen wird. Die übrigen Komponenten üben dieselben regelungstechnischen Funktionen aus wie im Modus "Vorwärts/Zug" aus und weisen dieselben Ventilstellungen auf.

**Rückwärts/Bremsen** (bei Rückwärtstalfahrt oder Bremsmodus bei Talfahrt): Das 4/3-Wegeventil 4.0 wird durch die auftretenden Kräfte in Position B' gebracht. Durch das betätigte 4/2-Wegeventil 5.1 resultiert regelungstechnisch dieselbe Funktionsweise und Eigenschaften wie im Modus "Vorwärts/Bremsen" beschrieben, Selbstverständlicherweise steht das 4/3-Wegeventil 8.2 bei Rückwärtsfahrt immer in Position A".

### BETRIEBSMODUS "RADANTRIEB AUSGESCHALTET"

Bei Nichtgebrauch der hydrostatischen Radantriebsvorrichtung sind alle Ventile ohne elektrisches Signal, d.h. in der definierten Grundstellung. Die Hydraulikpumpe 6 kann ausgeschaltet oder über die Hydraulikleitungen 7', 7", 7''' von den verschiedenen Ventilen getrennt sein. Das Rad 9 ist mechanisch vom hydrostatischen Radantriebsmotor 3.1 getrennt, d.h. nicht kraftschlüssig verbunden.

In diesem Betriebsmodus kann der Anhänger 2 beliebig eingesetzt werden, d.h. wie ein Anhänger ohne hydrostatische Radantriebsvorrichtung.

Weitere vorteilhafte Ausführungsformen ergeben sich dadurch, indem die erwähnten Stellgrössen nicht manuell eingestellt, sondern über spezielle bzw. zusätzliche Sensoren ermittelt werden. Im Vordergrund stehen dabei Sensoren, die beispielsweise die Fahrtrichtung, den Betadungszustand, das Gewicht, den Zugwiderstand, die Topografie, die Geschwindigkeiten der einzelnen Räder für die Schlupfbestimmung etc., aufnehmen und daraus die entsprechenden Stellgrössen automatisch ermittelt und in den Hauptsteuerblock 8 bzw. in die einzelnen Regelvorrichtungen 5 eingespiesen werden.

Eine weitere vorteilhafte Ausführungsform der erfindungsgemässen Vorrichtung geht dahin, an der Zugvorrichtung 4 weitere Messvorrichtungen 4.1' anzubringen, welche die dort vorherrschenden Betriebszustände mehrdimensional aufnehmen und anhand dieser Werte, die einzelnen auf die hydrostatischen Radantriebsmotoren 3.1 übertragenen Antriebsleistungen mittels mindestens eines weiteren Regelkreises entsprechend zu regeln.

Weitere vorteilhafte Ausführungsformen der hier zur Verfügung gestellten Erfindung bestehen darin, einzelne oder sämtliche hydraulischen Komponenten teilweise oder vollständig durch elektrische, elektronische oder elektromagnetische Komponenten zu ersetzen und beispielsweise anstelle der Hydraulikpumpe 6 einen Stromgenerator und anstelle des hydrostatischen Radantriebsmotors 3.1 einen entsprechenden Elektromotor einzusetzen.

Die durch die Messvorrichtung 4.1 ermittelten Werte können selbstredend auch mit anderen Hilfsmitteln wie Dehnmessstreifen etc. aufgenommen werden und je nach Ausführung der Komponenten, hydraulisch, elektrisch oder mechanisch in das Regelungssystem eingespiesen werden.

Im Bezug auf die Leistungsversorgung des vorliegenden Systems sind ausser der beschriebenen, bevorzugten Ausführungsform, weitere Möglichkeiten gegeben. Vorstellbar ist beispielsweise einen separaten Motor, aufgebaut auf dem Anhänger oder dem Zugfahrzeug, der ausschliesslich oder anteilsmässig für die Energieversorgung der Hydraulikpumpe 6 aufkommt.

Die Anzahl der angetriebenen Räder 9 am Anhänger 2 ist durch das vorliegende System nicht limitiert. Es kann ein einziges oder alle Räder mit einem erfindungsgemässen Antrieb ausgerüstet werden, wobei das Antriebskonzept beliebig gewählt werden kann. Als Antriebskonzept können sowohl Radnabenmotoren (einzel an jedem Rad) oder Triebachsen mit Differenzial und zentral angeordnetem Hydromotoren eingesetzt werden.

Die vorliegend zur Verfügung gestellte Erfindung lässt sich für sämtliche Arten gezogener Anhänger einsetzen, vorzugsweise jedoch für schwere oder schwer beladene Anhänger in schwierigem Gelände. Solche Verhältnisse ergeben sich öfters im landwirtschaftlichen Ernte- und Produktionsbetrieb aber auch in der Forstwirtschaft.

## Patentansprüche

1. Anhänger (2) mit einer Zugvorrichtung(4) zum Anhängen an ein Zugfahrzeug (1), mit wenigstens einer Radantriebsvorrichtung (3) und Mittel an der Zugvorrichtung (4) zum Ermitteln der Krüffeverhältnisse zwischen Zugfahrzeug (1) und Anhänger (2), wobei die Mittel in Wirkverbindung stehen mit einer Steuervorrichtung zum Steuern der Radantribsvorrichtung in Abhängigkeit der genannten Krüffeverhältnisse **dadurch gekennzeichnet**, dassdurch dieMittel an der Zugvorrichtung (4) der Zustartd des Anhängers (2) bezüglich Zug. Druck oder Neutral ermittelt wird und dieser Zustand mit wenigstens einem ersten Signal für das auf den Anhänger (2) zu übertragende maximale Drehmoment, sowie wenigstens einem weiteren Signal für die Fahrtrichtung in die Steuervorrichtung eingespiesen wird, welche die Radantriebsvorrichtung (3) in Abhängigkeit der Krüffeverhältnisse sowie der wenigstens zwei erwähnten Signale, mit Drucköl beaufschlagt.

2. Vorrichtung gemäss Patentanspruch 1, **dadurch gekennzeichnet, dass** die am Anhänger (2) wirkende maximale Antriebs- und Bremsleistung vorgegeben werden kann und sich die effektiv auf den Anhänger (2) übertragene Antriebs- oder Bremsleistung entsprechend den vorhandenen Fahrzuständen und Terrainverhältnissen automatisch anpasst.

3. Vorrichtung gemäss Patentanspruch 1 oder 2, **dadurch gekennzeichnet, dass** die am Anhänger (2) wirkende maximale Antrieibsleistung vorgegeben werden kann und sich die effektiv auf den Anhänger (2) übertragene Leistung entsprechend den vorhandenen Fahrzuständen und Terrainverhältnissen auch bei einer Kurvenfahrt über die Druck- und Förderstromregelung automatisch anpasst.

4. Vorrichtung gemäss einem der vorstehenden Patentansprüche, **dadurch gekennzeichnet, dass** die auf den Anhänger (2) übertragene Leistung mittels einer hydrostatischen, elektrischen oder elektromagnetischen Radantriebsvorrichtung (3) erfolgt.

5. Vorrichtung gemäss einem der vorstehenden Patentansprüche, **dadurch gekennzeichnet, dass** die auf den Anhänger (2) übertragene Leistung über mindestens eine vorzugsweise am Zugfahrzeug (1) angebrachte Hydraulikpumpe (6) oder einen Stromgenerator erfolgt.

6. Vorrichtung gemäss einem der vorstehenden Ansprüche, **dadurch gekennzeichnet, dass** mittels einer an der Zugvorrichtung (4) angebrachten Messvorrichtung (4.1) die auf die Zugvorrichtung (4) einwirkenden Kräfte in einer oder mehreren, unterschledlichen Richtungen gemessen werden und als Stellgrösse(n) für die Regelung der am Anhänger (2) wirkenden Antriebs- oder Bremsleistungen verwendet werden.

7. Vorrichtung gemäss einem der vorstehenden Ansprüche, **dadurch gekennzeichnet, dass** die Anzahl angetriebener Räder am Anhänger (2) beliebig gewählt und einzelnen oder gemeinsam angetrieben bzw. gebremst werden kann.

8. Vorrichtung gemäss einem der vorstehenden Ansprüche, **dadurch gekennzeichnet, dass** die vorhandenen Krüffeverhältnisse an der Zugvorrichtung (4) mit mechanischen, elektrischen, elektronischen oder eicktromagrietischen Mitteln aufgenommen und entsprechend als Stellgrössen in die Regelvorrichtung 5 eingespiesen werden.

9. Vorrichtung gemäss einem der vorstehenden Ansprüche, **dadurch gekennzeichnet, dass** neben den vorhandenen Krüffeverhältnisse an der Zugvorrichtung (4) weitere Parameter wie Ladegewicht, Geschwindigkeit der einzelnen Räder, Topografie, Schlupf usw. in die Regelvorrichtung (5) eingespiesen und berücksichtigt werden.

10. Verfahren zum Antreiben eines an ein Zugfahrzeug (1) angehängten Anhängers (2) mit einer Zugvorrichtung (4), an der der Anhänger (2) am Zugfahrzeug (1) angehängt ist und mit wenigstens einer Radantriebsvorrichtung (3), wobei die Krüffeverhältnisse zwischen dem Zugfahrzeug (1) und dem Anhänger (2) ermittelt werden und dass in Abhängigkeit von diesen Krüffeverhältnisse eine Steuervorrichtung zum Steuern der Radantriebsvon-ichtung (3) beaufschlagt wird, **dadurch gekennzeichnet, dass** an der Zugvorrichtung (4) der Zustand des Anhängers (2) bezüglich Zug, Druck oder Neutral ermittelt wird und dieser Zustand mit wenigstens einem ersten Signal für das auf den Anhänger (2) zu übertrangende maximale Drehmoment, sowie wenigstens einem weiteren Signal für die Fahrtrichtung in die Steuervorrichtung eingespiesen wird, welche die Radantriebsvorrichtung (3) in Abhänaigkeit der Krüffeverhältnisse sowie der wenigstens zwei erwähnten Signale mit Drucköl beaufschlagt.

11. Verfahren gemäss Patentanspruch 10, **dadurch gekennzeichnet, dass** die and die Zugvorrichtung (4) einwirkenden Krüth gemezole werden und abhängig von diesen Werten mindestens ein hydrostatischer Radantriebsmotor 3.1 mit Leistung (1. Stellung) oder nicht mit Leistung (2. Stellung, neutral) versorgt wird oder mindestens ein hydrostatischer Radantriebsmotor 3.1 als Bremsvorrichtung (3. Stellung) eingesetzt wird.

12. Verfahren gemäss Patentanspruch 10 oder 11, **dadurch gekennzeichnet, dass** die maximale auf die Räder (9) eines Anhängers (2) übertragene Antrfebs- und Bremsleistung automatisch oder manuell erfolgen kann.

13. Verfahren gemäss einem der vorstehenden Ansprüche, **dadurch gekennzeichnet, dass** sich die auf die Räder (9) eines Anhängers (2) übertragene Antriebs- und Bremsleistung automatisch entsprechend den vorhandenen Krüfferverhältnisse an der Zugvorrichtung (4) anpassen.

14. Verfahren gemäss einem der vorstehenden Ansprüche, **dadurch gekennzeichnet, dass** sich dieses Verfahren sowohl für die Vorwärts- wie auch Rückwärtsfahrt gleichermasen verwenden lässt.

15. Verfahren gemäss einem der vorstehenden Ansprüche, **dadurch gekennzeichnet, dass** einzelne oder mehrere Räder (9) eines Anhängers (2) einzeln oder gemeinsam mit Antriebs- oder Bremsleistung beaufschlagt werden.

16. Verfahren gemäss einem der vorstehenden Ansprüche, **dadurch gekennzeichnet, dass** die Krüfferverhältnisse an der Zugvorrichtung (4) mehrdimensional aufgenommen und entsprechend die einzelnen Räder (9) eines Anhängers mit Antriebs- oder Bremsleistung beaufschlagt werden.

17. Verfahren gemäss einem der vorstehenden Ansprüche, **dadurch gekennzeichnet, dass** neben den an der Zugvorrichtung (4) herrschenden Krüfferverhältnisse auch andere Parameter wie Geschwindigkeit, Schlupf, Last, Topografie erfasst werden und in das Regelsystem Eingang finden und so bei der Beaufschlagung der Räder (9) mit Antriebs- und Bremsleistung berücksichtigt werden.

## Claims

1. An apparatus for driving a trailer 2 which is hitched to a towing vehicle 1 and has a towing device to hitch the trailer 2 to the towing vehicle 1 and has at least one wheel driving device, **characterized by** means at the towing device for determining the forces between the towing vehicle 1 and the trailer 2, wherein the means are operably connected to a control device for controlling the wheel driving device subject to said forces.

2. The apparatus in accordance with claim 1, **characterised in that** the maximum driving and braking power acting on the trailer 2 can be predetermined and the driving or braking power actually transmitted to the trailer 2 is automatically adjusted according to the existing driving conditions and terrain situations.

3. The apparatus in accordance with claim 1 or 2, **characterised in that** the maximum driving power acting on the trailer 2 can be predetermined and the power actually transmitted to the trailer 2 is automatically adjusted according to the existing driving conditions and terrain situations via the pressure and flow control, even during cornering.

4. The apparatus in accordance with any one of the preceding claims, **characterised in that** the power transmitted to the trailer 2 is achieved by means of a hydrostatic, electrical or electromagnetic wheel driving device 3.

5. The apparatus in accordance with any one of the preceding claims, **characterised in that** the power transmitted to the trailer 2 is achieved by means of at least one hydraulic pump 6 which is, preferrably, attached to the towing vehicle 1 or at least one current generator.

6. The apparatus in accordance with any one of the preceding claims, **characterised in that**, by means of a measuring device 4.1 attached to the towing device 4, the forces acting on the towing device are measured in one direction or a plurality of different directions and used as control variable(s) for controlling the driving and braking powers acting on the trailer 2.

7. The apparatus in accordance with any one of the preceding claims, **characterised in that** the number of driven wheels at the trailer 2 can be selected and driven/decelerated separately or jointly as desired.

8. The apparatus in accordance with any one of the preceding claims, **characterised in that** the forces existing at the towing device 4 are registered by mechanical, electrical, electronic or electromagnetic means and accordingly supplied to the control device 5 as control variables.

9. The apparatus in accordance with any one of the preceding claims, **characterised in that**, in addition to the forces existing at the towing device 4, other parameters, such as load weight, speed of the individual wheels, topography, slip, etc., are supplied to the control device 5 and taken into account.

10. A method for driving a trailer 2 which is hitched to a towing vehicle 1 and has a towing device by means of which the trailer 2 is hitched to the towing device 1 and has at least one wheel driving device, **characterised in that** the forces between the towing vehicle 1 and the trailer are determined and that a control device for controlling the wheel driving device is charged subject to these forces.

11. The method in accordance with claim 10, **characterised in that** the forces acting on the towing device 4 are measured and that, depending on these values, at least one hydrostatic wheel driving engine 3.1 is supplied with power (position 1) or is not supplied with power (position 2, neutral) or at least one hydrostatic wheel driving engine 3.1 is used as braking device (position 3).

12. The method in accordance with claim 10 or 11, **characterised in that** the maximum driving and braking power transmitted to the wheels 9 of a trailer 2 can be achieved automatically or manually.

13. The method in accordance with any one of the preceding claims, **characterised in that** the driving and braking power transmitted to the wheels 9 of a trailer 2 is automatically adjusted according to the forces existing at the towing device 4.

14. The method in accordance with any one of the preceding claims, **characterised in that** this method can be likewise used both for forward and reverse driving.

15. The method in accordance with any one of the preceding claims, **characterised in that** the driving or braking power is separately or jointly applied to individual or a plurality of wheels 9 of a trailer 2.

16. The method in accordance with any one of the preceding claims, **characterised in that** the forces at the towing device 4 are registered in a multi-dimensional manner and the drive or braking power is accordingly applied to the individual wheels 9 of a trailer.

17. The method in accordance with any one of the preceding claims, **characterised in that**, in addition to the forces existing at the towing device 4, other parameters, such as speed, slip, load, topography, are also registered and supplied to the control system and are, therefore, taken into account when the driving and braking power is applied to the wheels 9.

## Revendications

1. Dispositif pour entraîner une remorque 2 attachée à un véhicule tracteur 1, avec un dispositif de traction pour attacher la remorque 2 au véhicule tracteur 1 et avec au moins un dispositif d'entraînement de roues, **caractérisé par** des moyens situés sur le dispositif de traction pour déterminer les rapports de forces entre le véhicule tracteur 1 et la remorque 2, les moyens étant en liaison active avec un dispositif de commande pour commander le dispositif d'entraînement de roues en fonction desdits rapports de forces.

2. Dispositif selon la revendication 1, **caractérisé en ce que** la puissance maximale d'entraînement et de freinage qui agit sur la remorque 2 peut être prédéterminée et la puissance d'entraînement ou de freinage effectivement transmise à la remorque 2 s'adapte automatiquement conformément aux états de conduite et aux conditions de terrain donnés.

3. Dispositif selon la revendication 1 ou 2, **caractérisé en ce que** la puissance maximale d'entraînement qui agit sur la remorque 2 peut être prédéterminée et la puissance effectivement transmise à la remorque 2 s'adapte automatiquement conformément aux états de conduite et aux conditions de terrain donnés, y compris dans le cas d'une prise de virage, par l'intermédiaire du réglage de pression et de débit.

4. Dispositif selon l'une des revendications précédentes, **caractérisé en ce que** la puissance transmise à la remorque 2 s'effectue au moyen d'un dispositif d'entraînement de roues 3 hydrostatique, électrique ou électromagnétique.

5. Dispositif selon l'une des revendications précédentes, **caractérisé en ce que** la puissance transmise à la remorque 2 s'effectue par l'intermédiaire d'au moins une pompe hydraulique 6 montée de préférence sur le véhicule tracteur 1 ou d'une génératrice de courant.

6. Dispositif selon l'une des revendications précédentes, **caractérisé en ce que**, au moyen d'un dispositif de mesure 4.1 monté sur le dispositif de traction 4, les forces agissant sur le dispositif de traction sont mesurées dans une ou plusieurs directions différentes et utilisées en tant que grandeur(s) de réglage pour le réglage des puissances d'entraînement ou de freinage qui agissent sur la remorque 2.

7. Dispositif selon l'une des revendications précédentes, **caractérisé en ce que** le nombre de roues entraînées sur la remorque 2 peut être sélectionné au choix avec entraînement resp. freinage individuel ou conjoint.

8. Dispositif selon l'une des revendications précédentes, **caractérisé en ce que** les rapports de forces existants sur le dispositif de traction 4 sont captés avec des moyens mécaniques, électriques, électroniques ou électromagnétiques et sont introduits en conséquence dans le dispositif de réglage 5 en tant que grandeurs de réglage.

9. Dispositif selon l'une des revendications précédentes, **caractérisé en ce que** sont introduits dans le dispositif de réglage 5 et pris en compte, outre les rapports de forces existants sur le dispositif de traction 4, d'autres paramètres tels que le poids de charge, la vitesse des différentes roues, la topographie, le glissement, etc.

10. Procédé pour entraîner une remorque 2 attachée à un véhicule tracteur 1, avec un dispositif de traction au niveau duquel la remorque 2 est attachée au véhicule tracteur 1 et avec au moins un dispositif d'entraînement de roue, **caractérisé en ce qu'**il y a détermination des rapports de forces entre le véhicule tracteur 1 et la remorque et **en ce qu'**un dispositif de commande servant à commander le dispositif d'entraînement de roues est alimenté en fonction de ces rapports de forces.

11. Procédé selon la revendication 10, **caractérisé en ce que** les forces qui agissent sur le dispositif de traction 4 sont mesurées et **en ce que**, en fonction de ces valeurs, au moins un moteur hydrostatique d'entraînement de roues 3.1 est alimenté en puissance (1^{re} position) ou n'est pas alimenté en puissance (2^{e} position, neutre) ou au moins un moteur hydrostatique d'entraînement de roues 3.1 est utilisé comme dispositif de freinage (3^{e} position).

12. Procédé selon la revendication 10 ou 11, **caractérisé en ce que** la puissance maximale d'entraînement et de freinage transmise aux roues 9 d'une remorque 2 peut s'effectuer automatiquement ou manuellement.

13. Procédé selon l'une des revendications précédentes, **caractérisé en ce que** la puissance d'entraînement et de freinage transmise aux roues 9 d'une remorque 2 s'adapte automatiquement conformément aux rapports de forces existants sur le dispositif de traction 4.

14. Procédé selon l'une des revendications précédentes, **caractérisé en ce que** ce procédé peut s'utiliser pareillement tant pour la marche avant que pour la marche arrière.

15. Procédé selon l'une des revendications précédentes, **caractérisé en ce que** différentes roues ou plusieurs roues 9 d'une remorque 2 peuvent être alimentées individuellement ou conjointement en puissance d'entraînement ou de freinage.

16. Procédé selon l'une des revendications précédentes, **caractérisé en ce que** les rapports de forces sur le dispositif de traction 4 sont captés en plusieurs dimensions et les différentes roues 9 d'une remorque sont alimentées en conséquence en puissance d'entraînement ou de freinage.

17. Procédé selon l'une des revendications précédentes, **caractérisé en ce que**, outre les rapports de forces existants sur le dispositif de traction 4, d'autres paramètres tels que la vitesse, le glissement, la charge, la topographie, sont captés et entrent dans le système de réglage et sont ainsi pris en compte lors de l'alimentation des roues 9 en puissance d'entraînement et de freinage.
